# EUROPÄISCHE PATENTSCHRIFT

(11) **EP 4 182 986 B1**
(45) Veröffentlichungstag und Bekanntmachung des Hinweises auf die Patenterteilung: **02.10.2024**
(21) Anmeldenummer: 21746416.3
(22) Anmeldetag: 15.07.2021
(51) Int. Cl.: H01M 8/2485, B60L 50/72

(54) **BRENNSTOFFZELLENSTAPEL, BRENNSTOFFZELLENVORRICHTUNG SOWIE BRENNSTOFFZELLEN-FAHRZEUG**
FUEL CELL STACK, FUEL CELL APPARATUS AND FUEL CELL VEHICLE
EMPILEMENT DE PILES À COMBUSTIBLE, APPAREIL À PILE À COMBUSTIBLE ET VÉHICULE À PILE À COMBUSTIBLE

(30) Priorität: 17.07.2020 DE 102020119021
(43) Veröffentlichungstag der Anmeldung: 24.05.2023
(73) Patentinhaber: VOLKSWAGEN AG, 38440 Wolfsburg (DE); KRAFTWERK TUBES GMBH, 01324 Dresden (DE)
(72) Erfinder: KÜHN, Sascha, 01324 Dresden (DE); HEINRICH, Lutz, 01324 DRESDEN (DE); TURNER, Heiko, 38159 Vechelde (DE); JENSSEN, Dirk, 38114 Braunschweig (DE); SCHLITZBERGER, Christian, 39217 Schönebeck (DE); BUCHENBERGER, Martin, 38176 Wendeburg (DE); WALKLING, Friedhelm, 38114 Braunschweig (DE); MOLL, Florian, 38550 Isenbüttel (DE); WIELAND, Steffen, 74388 Talheim (DE); ZIMMERMANN, Christin, 01189 Dresden (DE)
(74) Vertreter: Hentrich Patent- & Rechtsanwaltspartnerschaft mbB
(86) Internationale Anmeldenummer: PCT/EP2021/069773
(87) Internationale Veröffentlichungsnummer: WO 2022/013359

(56) Entgegenhaltungen:
- WO-A1-2021/175553
- DE-A1- 102018 208 981
- DE-A1- 102018 219 201
- DE-A1- 102020 106 091
- US-A1- 2005 089 736

## Beschreibung

Die Erfindung betrifft einen Brennstoffzellenstapel mit mindestens einer, in einer Stapelmodulbox aufgenommenen Brennstoffzelle, die mehrere Medienkanäle umfasst, mit auf der Außenseite der Stapelmodulbox angeordneten Medienführungen, die in Strömungsverbindung mit den Medienkanälen stehen, und mit einem um die Stapelmodulbox geführten Verspannsystem, dessen Spannmittel um die mit einer Federfunktion ausgeführten Medienführungen geführt ist. Die Erfindung betrifft weiterhin eine Brennstoffzellenvorrichtung sowie ein Brennstoffzellen-Fahrzeug.

Brennstoffzellen dienen dazu, in einer chemischen Reaktion zwischen einem wasserstoffhaltigen Brennstoff und einem sauerstoffhaltigen Oxidationsmittel, in der Regel Luft, elektrische Energie bereitzustellen.

Bei einer Festoxid-Brennstoffzelle (Solid Oxide Fuel Cell SOFC) besteht dabei eine Elektrolytschicht aus einem namensgebenden festen Werkstoff, z.B. keramischen yttriumdotierten Zirkoniumdioxid, der in der Lage ist, Sauerstoffionen zu leiten, während Elektronen nicht geleitet werden. Die Elektrolytschicht ist zwischen zwei Elektrodenschichten aufgenommen, nämlich der Kathodenschicht, der die Luft zugeführt wird, und der Anodenschicht, die mit dem Brennstoff versorgt wird, der durch H₂, CO, CH₄ oder ähnliche Kohlenwasserstoffe gebildet sein kann. Wird die Luft durch die Kathodenschicht zu der Elektrolytschicht geführt, nimmt der Sauerstoff zwei Elektronen auf und die gebildeten Sauerstoffionen O²⁻ bewegen sich durch die Elektrolytschicht zu der Anodenschicht, wobei die Sauerstoffionen dort mit dem Brennstoff reagieren unter Bildung von Wasser und CO₂. Kathodenseitig findet die folgende Reaktion statt: ½ O₂ + 2e⁻ -> 2O²⁻ (Reduktion/Elektronenaufnahme). An der Anode erfolgen die folgenden Reaktionen: H₂ + O²⁻ → H₂O + 2e⁻sowie CO + O²⁻ → CO₂ + 2e- (Oxidation/Elektronenabgabe).

Bei einer Polymerelektrolytmembranbrennstoffzelle (PEM-Brennstoffzelle) werden statt der Sauerstoffionen Wasserstoffkerne über die Membran transportiert, da eine elektrochemische Oxidation von H₂ zu H⁺ unter Abgabe von Elektronen e- stattfindet. Über die Membran erfolgt ein Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig reagieren im Kathodenraum die Sauerstoffanionen mit den über die Membran transportierten Protonen unter Bildung von Wasser. An der Anode erfolgt dabei die folgende Reaktion: 2H₂ → 4H⁺ + 4e⁻ (Oxidation/Elektronenabgabe); kathodenseitig findet die folgende Reaktion statt: O₂ + 4H⁺ + 4e⁻ → 2H₂O (Reduktion/Elektronenaufnahme).

Zur Steigerung der durch eine Brennstoffzellenvorrichtung bereit gestellten elektrischen Leistung besteht die Möglichkeit, mehrere Brennstoffzellen in einem Brennstoffzellenstapel zusammen zu fassen, für den eine ausreichende Versorgung mit den Reaktanten sichergestellt sein muss, die durch Medienführungen dem Brennstoffzellenstapel und in diesem den Brennstoffzellen zugeführt werden.

Diese Mehrzahl von in einem Brennstoffzellenstapel zusammengefassten Brennstoffzellen wird im Allgemeinen mithilfe von Zugelementen mit einer Kraft im Bereich mehrerer Tonnen verpresst, um einen ausreichenden Kontaktdruck an der Membran zur Reduktion ohmscher Verluste zu erzielen und mittels der hohen Verpressung Undichtigkeiten eingesetzter Dichtungen zu vermeiden.

Zu beachten ist dabei allerdings, dass während des Betriebs des Brennstoffzellenstapels Kräfte auftreten, die zu einer Steigerung oder Reduktion der Verpresskraft führen können. Die Steigerung der Verpresskraft wird verursacht durch eine Wärmeausdehnung der verwendeten Komponenten, durch den für die Zuführung und Verteilung der Reaktanten verwendeten Druck, wobei aufgrund der hohen Temperaturen bei Festoxidbrennstoffzellen die Wärmeausdehnung besonders bedeutsam ist ebenso wie die negative Wärmeausdehnung, die bei sinkenden oder niedrigen Temperaturen zu einer sinkenden Verpresskraft führt.

In der DE 10 2007 002 286 A1 wird eine Medienversorgungsplatte vorgeschlagen, die Anschlüsse für die Medienzuführung und Medienabführung aufweist, wobei der Brennstoffzellenstapel direkt auf die Medienversorgungsplatte gestapelt wird. Die Medienversorgungsplatte weist weiterhin einen Durchbruch für die Durchführung eines Brennstoffzellenstapel-Spannelements auf. Die EP 2 053 676 A1 offenbart die Verpressung eines Brennstoffzellenstapels mittels einer Verpresseinrichtung. In der KR 20050070724 A ist ein zylindrischer Brennstoffzellenstapel beschrieben, bei dem zylindrische Kanäle für die Versorgung der Anode und Kathode genutzt werden. In der DE 10 2018 208 981 A1 wird ein Brennstoffzellenstapel beschrieben, der eine vereinfachte Medienzufuhr erlaubt. In der DE 10 2018 219 201 A1 wird ebenfalls ein Brennstoffzellenstapel beschrieben, der eine vereinfachte Medienzufuhr erlaubt und zudem derart ausgebildet ist, dass ein Medium vor Eintritt in die Medienkanäle durch die Medienführungen vorbehandelt wird. In der Druckschrift US 2005/0089736 A1 werden Kühlplatten für einen Brennstoffzellenstapel beschrieben die Fortsätze aufweisen, um eine Dichtung zu realisieren, die insbesondere dem Auslauf von Kühlmittel entgegenwirken soll.

Aufgabe der vorliegenden Erfindung ist es, einen Brennstoffzellenstapel bereit zu stellen, der einen kompakten Aufbau besitzt. Aufgabe ist weiterhin, eine verbesserte Brennstoffzellenvorrichtung und ein verbessertes Brennstoffzellen-Fahrzeug bereit zu stellen.

Diese Aufgabe wird durch einen Brennstoffzellenstapel mit den Merkmalen des Anspruchs 1, durch eine Brennstoffzellenvorrichtung mit den Merkmalen des Anspruchs 8 und durch ein Brennstoffzellen-Fahrzeug mit den Merkmalen des Anspruchs 9 gelöst. Vorteilhafte Ausgestaltungen mit zweckmäßigen Weiterbildungen der Erfindung sind in den abhängigen Ansprüchen angegeben.

Der erfindungsgemäße Brennstoffzellenstapel zeichnet sich dadurch aus, dass Undichtigkeiten aufgrund einer Dehnung des Brennstoffzellenstapels, insbesondere aufgrund einer Wärmedehnung sicher vermieden werden, wobei ein kompaktes Design des Brennstoffzellenstapels vorliegt, bei dem separate Federpakete entbehrlich sind, also auch ein verminderter Bauraumbedarf vorliegt. Es ist ein Betrieb des Brennstoffzellenstapels unter Druck möglich und es liegt eine Funktionserweiterung der Medienführung als Verteilstruktur vor. Dabei besteht die Möglichkeit, dass die Federfunktion mindestens einer der Medienführungen durch deren Ausbildung aus einem federnden Material realisiert ist, also einem Material, das elastische Eigenschaften aufweist. Alternativ oder auch ergänzend besteht die Möglichkeit, dass die Federfunktion mindestens einer der Medienführungen durch deren elastisch kompressible Formgebung realisiert ist, die insbesondere durch einen Balg realisiert werden kann. Andere Formgebungen sind allerdings gleichfalls möglich. Das Spannmittel ist vorzugsweise als ein Spannband gestaltet, kann aber auch Gewindestangen oder andere Zugelemente, die eine mechanische Spannung aufbringen, umfassen.

Bevorzugt ist weiterhin, dass Gaskanäle in ihrer Querschnittsgestalt unter der Wirkung des Verspannsystems unveränderlich sind, um so stets einen ausreichenden Querschnitt für die Durchleitung der Medien garantieren zu können, wobei die zu dem Spannmittel weisende Seite der Gaskanäle gerundet gestaltet ist für eine verbesserte Zusammenwirkung mit dem Spannmittel.

Die vorstehend genannten Vorteile und Wirkungen gelten auch für eine Brennstoffzellenvorrichtung mit einem Brennstoffzellenstapel der vorstehend geschilderten Art sowie für ein Brennstoffzellen-Fahrzeug mit einer derartigen Brennstoffzellenvorrichtung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung eines Querschnitts durch eine Stapelmodulbox, mit dem durch ein Spannmittel eine Verspannkraft ausübenden Verspannsystem, und
- Fig. 2: eine der Figur 1 entsprechende Darstellung mit einer gegenüber Figur 1 erhöhten Verspannkraft.

Eine Brennstoffzellenvorrichtung umfasst einen Brennstoffzellenstapel 1, der eine Mehrzahl von in Reihe geschalteten Brennstoffzellen aufweist. Die Brennstoffzellenvorrichtung kann beispielsweise Teil eines nicht näher dargestellten Brennstoffzellenfahrzeugs sein.

Jede der Brennstoffzellen umfasst eine Anode und eine Kathode sowie eine die Anode von der Kathode trennende ionenleitfähige Membran. Über Anodenräume innerhalb des Brennstoffzellenstapels 1 wird den Anoden Brennstoff (z. B. Wasserstoff) aus einem Gasdruckspeicher über eine Anodenzufuhrleitung zugeführt. Über Kathodenräume innerhalb des Brennstoffzellenstapels 1 kann den Kathoden Kathodengas (z. B. Sauerstoff oder Sauerstoff enthaltende Luft) über eine Kathodenzufuhrleitung zugeführt werden. Die Brennstoffzellenvorrichtung kann weiterhin einen Kühlmittelkreislauf zur Temperierung des Brennstoffzellenstapels 1 umfassen.

Der Brennstoff, das Kathodengas und gegebenenfalls das Kühlmittel müssen in den Brennstoffzellenstapel 1 eingeleitet und aus diesem wieder abgeleitet werden, wozu Medienführungen 2 genutzt werden.

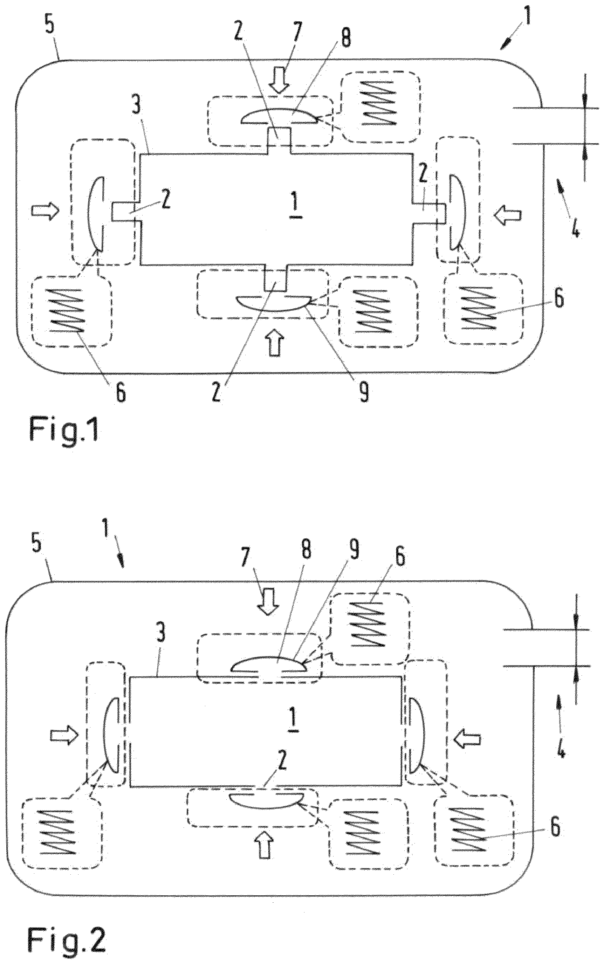

In Figur 1 ist ein stark vereinfachter Querschnitt durch einen Brennstoffzellenstapel 1 gezeigt mit einer nicht im einzelnen dargestellten, in einer Stapelmodulbox 3 aufgenommenen Brennstoffzelle, die mehrere Medienkanäle umfasst, die mit den auf der Außenseite der Stapelmodulbox 3 angeordneten Medienführungen 2 in Strömungsverbindung stehen. Um die Stapelmodulbox 3 ist ein Verspannsystem 4 geführt, dessen Spannmittel 5 die mit einer Federfunktion ausgeführten Medienführungen 3 umgibt, was in den Figuren 1 und 2 durch die Federsymbole 6 angedeutet ist, die den Medienführungen 2 zugeordnet sind.

Dabei kann die Federfunktion mindestens einer Medienführungen 2 durch deren Ausbildung aus einem federnden Material realisiert sein; alternativ oder auch ergänzend besteht die Möglichkeit, dass die Federfunktion mindestens einer der Medienführungen 2 durch deren elastisch kompressible Formgebung realisiert ist, insbesondere, dass mindestens eine der Medienführungen 2 als Balg geformt ist.

Figur 1 zeigt, dass das Spannmittel 5 als ein Spannband gestaltet ist, das um die Medienführungen 2 geführt ist und auf diese eine Kraft 7 ausübt. Expandiert beispielsweise die Stapelmodulbox 3 aufgrund einer Temperaturerhöhung oder eines auf diese ausgeübten Druckes, so erhöht sich die Verspannkraft, beziehungsweise die auf die Medienführungen 2 ausgeübten, durch die Pfeile 7 symbolisierten nach innen wirkenden Kräfte 7, so dass sich die aus der Figur 2 ersichtliche Situation ergibt, bei der die Medienführungen 2 federnd zusammengedrückt sind. Die Medienführungen 2 ersetzen damit ein getrenntes Federsystem oder Federpaket bei Gewährleistung der gleichen Funktion.

Nach einer nicht gezeigten Ausführungsform kann das Spannmittel 5 Gewindestangen umfassen, die allseitig wirkende Kräfte im Zusammenwirken mit weiteren Streben generieren können.

Zu beachten ist, dass die Gaskanäle 8 für die Zuleitung und Ableitung der Medien bezüglich der Stapelmodulbox 3 mit ihren Medienführungen 2 als Verteilstruktur in ihrer Querschnittsgestalt unter der Wirkung des Verspannsystems 4 unveränderlich sind (Figur 1 und Figur 2). Dadurch ist sichergestellt, dass der für die Durchleitung der Medien erforderliche Querschnitt immer die erforderliche Größe aufweist, wobei die zu dem Spannmittel 5 weisende Seite des Gaskanals 8 gerundet gestaltet ist, um eine bessere und verschleißbegünstigte Anlage an das Spannmittel 5 zu ermöglichen.

### BEZUGSZEICHENLISTE:

- 1: Brennstoffzellenstapel
- 2: Medienführung
- 3: Stapelmodulbox
- 4: Verspannsystem
- 5: Spannmittel
- 6: Federsymbol
- 7: Kraft / Pfeil
- 8: Gaskanal
- 9: gerundete Seite

## Patentansprüche

1. Brennstoffzellenstapel (1) mit mindestens einer Brennstoffzelle, die mehrere Medienkanäle umfasst, mit Medienführungen (2), die in Strömungsverbindung mit den Medienkanälen stehen, und mit einem Spannmittel (5) aufweisenden Verspannungssystem (4), **dadurch gekennzeichnet, dass** die Brennstoffzelle in einer Stapelmodulbox (3) aufgenommen ist, dass die Medienführungen (2) auf der Außenseite der Stapelmodulbox (3) angeordnet und mit einer Federfunktion ausgeführt sind und dass die Spannmittel um die Medienkanäle geführt sind, wobei die Federfunktion durch die Ausbildung der Medienführungen (2) aus einem federnden Material realisiert ist.

2. Brennstoffzellenstapel (1) nach Anspruch 1 oder 2, **dadurch gekennzeichnet, dass** die Federfunktion mindestens einer der Medienführungen (2) durch deren elastisch kompressible Formgebung realisiert ist.

3. Brennstoffzellenstapel (1) nach Anspruch 3, **dadurch gekennzeichnet, dass** mindestens eine der Medienführungen (2) als Balg geformt ist.

4. Brennstoffzellenstapel (1) nach einem der Ansprüche 1 bis 4, **dadurch gekennzeichnet, dass** das Spannmittel (5) als ein Spannband gestaltet ist.

5. Brennstoffzellenstapel (1) nach einem der Ansprüche 1 bis 4, **dadurch gekennzeichnet, dass** das Spannmittel (5) Gewindestangen umfasst.

6. Brennstoffzellenstapel (1) nach einem der Ansprüche 1 bis 6, **dadurch gekennzeichnet dass** Gaskanäle (8) in ihrer Querschnittsgestalt unter der Wirkung des Verspannsystems (4) unveränderlich sind.

7. Brennstoffzellenstapel (1) nach Anspruch 7, **dadurch gekennzeichnet, dass** die zu dem Spannmittel 5 weisende Seite (9) des Gaskanals (8) gerundet gestaltet ist.

8. Brennstoffzellenvorrichtung mit einem Brennstoffzellenstapel (1) nach einem der Ansprüche 1 bis 8.

9. Brennstoffzellen-Fahrzeug mit einer Brennstoffzellenvorrichtung nach Anspruch 9.

## Claims

1. A fuel cell stack (1) having at least one fuel cell which comprises a plurality of media channels, having media guides (2) which are in flow connection with the media channels, and having a clamping system (4) which has clamping means (5), **characterized in that** the fuel cell is accommodated in a stack module box (3), **in that** the media guides (2) are arranged on the outside of the stack module box (3) and are designed with a spring function, and **in that** the clamping means are guided around the media channels, the spring function being realized by the media guides (2) being formed from a resilient material.

2. The fuel cell stack (1) according to claim 1 or 2, **characterized in that** the spring function of at least one of the media guides (2) is realized by their elastically compressible shaping.

3. The fuel cell stack (1) according to claim 3, **characterized in that** at least one of the media guides (2) is shaped as a bellows.

4. The fuel cell stack (1) according to any one of claims 1 to 4, **characterized in that** the clamping means (5) is designed as a clamping band.

5. The fuel cell stack (1) according to any one of claims 1 to 4, **characterized in that** the clamping means (5) comprises threaded rods.

6. The fuel cell stack (1) according to any one of claims 1 to 6, **characterized in that** gas channels (8) are invariable in their cross-sectional shape under the action of the clamping system (4).

7. The fuel cell stack (1) according to claim 7, **characterized in that** the side (9) of the gas channel (8) facing the clamping means (5) is rounded.

8. A fuel cell device with a fuel cell stack (1) according to any one of claims 1 to 8.

9. Fuel cell vehicle with a fuel cell device according to claim 9.

## Revendications

1. Empilement de piles à combustible (1) avec au moins une pile à combustible qui comprend plusieurs canaux de fluide, avec des guidages de fluide (2) qui sont en liaison d'écoulement avec les canaux de fluide, et avec un système de renforcement (4) présentant des moyens de serrage (5), **caractérisé en ce que** la pile à combustible est reçue dans une boîte de module d'empilement (3), **en ce que** les guidages de fluide (2) sont agencés sur le côté extérieur de la boîte de module d'empilement (3) et sont formés avec une fonction de ressort et **en ce que** les moyens de serrage sont guidés autour des canaux de fluide, dans lequel la fonction de ressort est effectuée par la formation des guidages de fluide (2) en un matériau élastique.

2. Empilement de piles à combustible (1) selon la revendication 1 ou 2, **caractérisé en ce que** la fonction de ressort au moins d'un des guidages de fluide (2) est effectuée par son formage compressible élastiquement.

3. Empilement de piles à combustible (1) selon la revendication 3, **caractérisé en ce qu'**au moins un des guidages de fluide (2) est formé comme soufflet.

4. Empilement de piles à combustible (1) selon l'une quelconque des revendications 1 à 4, **caractérisé en ce que** le moyen de serrage (5) est conçu comme une bande de serrage.

5. Empilement de piles à combustible (1) selon l'une quelconque des revendications 1 à 4, **caractérisé en ce que** le moyen de serrage (5) comprend des tiges filetées.

6. Empilement de piles à combustible (1) selon l'une quelconque des revendications 1 à 6, **caractérisé en ce que** des canaux de gaz (8) ne sont pas modifiables dans leur forme de section transversale sous l'action du système de renforcement (4).

7. Empilement de piles à combustible (1) selon la revendication 7, **caractérisé en ce que** le côté (9) tourné vers le moyen de serrage (5) du canal de gaz (8) est conçu de manière arrondie.

8. Dispositif de piles à combustible avec un empilement de piles à combustible (1) selon l'une quelconque des revendications 1 à 8.

9. Véhicule à piles à combustible avec un dispositif de piles à combustible selon la revendication 9.
